# EUROPEAN PATENT SPECIFICATION

(11) **EP 1 064 234 B1**
(45) Date of publication and mention of the grant of the patent: **25.05.2005**
(21) Application number: 99910477.1
(22) Date of filing: 19.03.1999
(51) Int. Cl.: C03C 4/00

(54) **ERBIUM DOPED OPTICAL GLASS**
ERBIUM-DOTIERTES, OPTISCHES GLAS
VERRE OPTIQUE DOPE A L'ERBIUM

(30) Priority: 19.03.1998 GB 9805800
(43) Date of publication of application: 03.01.2001
(73) Proprietor: THE UNIVERSITY OF LEEDS, Leeds, West Yorkshire LS2 9JT (GB)
(72) Inventor: JHA, Animesh, Leed s LS7 4NJ (GB); NAFTALY, Mira, Leeds LS12 2HT (GB); SHEN, Shaoxiong, Leeds LS 6 2EZ (GB)
(74) Representative: McDonough, Jonathan
(86) International application number: PCT/GB1999/000726
(87) International publication number: WO 1999/047464

(56) References cited:
- EP-A- 0 640 571
- EP-A- 0 673 892
- EP-A- 0 802 169
- EP-A- 0 858 976
- WO-A-98/29351
- DE-A- 2 500 317
- US-A- 5 262 365
- US-A- 5 798 306
- YUHU WANG ET AL: "NEW TRANSPARENT VITROCERAMICS CODOPED WITH ER3+ AND YB3+ FOR EFFICIENT FREQUENCY UPCONVERSION" APPLIED PHYSICS LETTERS, vol. 63, no. 24, 13 December 1993 (1993-12-13), pages 3268-3270, XP000416520
- KAWAMOTO Y ET AL: "UPCONVERSION LUMINESCENCE OF ER3+ IN TRANSPARENT SIO2-PBF2-ERF3 GLASS CERAMICS" JOURNAL OF MATERIALS SCIENCE, vol. 33, no. 1, 1 January 1998 (1998-01-01), pages 63-67, XP000729147
- CLESCA B ET AL: "GAIN FLATNESS COMPARISON BETWEEN ERBIUM-DOPED FLUORIDE AND SILICA FIBER AMPLIFIERS WITH WAVELENGTH-MULTIPLEXED SIGNALS" IEEE PHOTONICS TECHNOLOGY LETTERS, vol. 6, no. 4, 1 April 1994 (1994-04-01), pages 509-512, XP000573258 cited in the application
- BAYART D ET AL: "EXPERIMENTAL INVESTIGATION OF THE GAIN FLATNESS CHARACTERISTICS FOR1.55 MUM ERBIUM-DOPED FLUORIDE FIBER AMPLIFIERS" IEEE PHOTONICS TECHNOLOGY LETTERS, vol. 6, no. 5, 1 May 1994 (1994-05-01), pages 613-615, XP000446974 cited in the application
- ZHU CONGSHAN ET AL: "UPCONVERSION FLUORESCENCE OF TEO2-PBO-BASED OXIDE GLASSES CONTAINING ER3+ IONS" JOURNAL OF NON-CRYSTALLINE SOLIDS, vol. 144, no. 1, 1 July 1992 (1992-07-01), pages 89-94, XP000276787 ISSN: 0022-3093
- PAN Z ET AL: "Raman spectra and thermal analysis of a new lead-tellurium -germanate glass system" JOURNAL OF NON-CRYSTALLINE SOLIDS, vol. 210, no. 2, 1 March 1997 (1997-03-01), page 130-135 XP004060817 ISSN: 0022-3093
- KAZUYUKI HIRAO ET AL: "CW ROOM TEMPERATURE UPCONVERSION LASING IN ER3+-DOPED FLUORIDE GLASS FIBER" JOURNAL OF NON-CRYSTALLINE SOLIDS, vol. 143, no. 1, 2 May 1992 (1992-05-02), pages 40-45, XP000268775 ISSN: 0022-3093
- SHAHRIARI M R ET AL: "THE EFFECT OF RARE EARTH IONS ON THE THERMAL STABILITY OF AIF3 -BASED GLASSES" JOURNAL OF NON-CRYSTALLINE SOLIDS, vol. 161, no. 1, 1 August 1993 (1993-08-01), pages 77-80, XP000496909 ISSN: 0022-3093
- OKADA K. ET AL: "Upconversion fluoresences in Al3-ZrF4 Based Fluoride Glass Containing ErF3" MATERIAL SCIENCE FORUM, vol. 32-33, 1988, pages 523-528, XP002113749
- PATENT ABSTRACTS OF JAPAN vol. 017, no. 496 (C-1108), 8 September 1993 (1993-09-08) & JP 05 132334 A (SUMITA KOGAKU GLASS KK), 28 May 1993 (1993-05-28)
- MOINE, B. ET AL: "Fluorescence dynamics of Er3+ and Ho3+ ions and energy transfer in some fluoride glasses" IEEE JOURNAL OF QUANTUM ELECTRONICS., vol. 25, no. 1, 1 January 1989 (1989-01-01), pages 88-96, XP002113750 IEEE INC. NEW YORK., US ISSN: 0018-9197

## Description

This invention relates to an erbium doped tellurite or germanate optical glass. This erbium doped optical glass can be used in an optical amplifier or laser in the third telecommunication window.

Erbium doped fibre amplifiers used for optical amplification at 1550nm are known. Such amplifiers are usually based on two types of glass host, silica or fluorozirconate with silica being by far the most common. The use of such glass hosts is disclosed in P.Wlksocki et al, OFC 1997, paper WF2; D Bayart et al, IEEE Photon Technol letter 6 (1994), 615 and B Clesca et al, IEEE Photon Technol letters 6 (1994) 509.

Fibre amplifiers based on a silica glass host have a gain profile which varies rapidly with wavelength. This makes such fibre amplifiers unsuitable for use in wavelength division multiplexers (WDM) as such devices must be capable of simultaneously transmitting signals at many different wavelengths at uniform power and without distortion. Such fibre amplifiers can only be used as wave division multiplexers in combination with complex filters; as described in P Wysocki et al, OFC 1997, paper PD2-1.

Fibre amplifiers based on fluorozirconate host glass (e.g. ZBLAN) have a smoother gain profile than amplifiers based on silica glass and are suitable for use in wavelength division multiplexing. However, fluorozirconate glass is difficult and expensive to fabricate and is vulnerable to environmental attack, especially by moisture. Also erbium doped ZBLAN fibre amplifiers cannot be pumped at 980 nm.

Both silica glass and fluorozirconate host glasses will only accept a low erbium ion concentration (a few 1000 ppm by weight) before concentration quenching significantly affects gain. Hence, fibre amplifiers based on these host glasses are typically several metres in length so precluding the manufacture of planar waveguide optical amplifiers.

EP 0 673 892 A2 discloses a silica glass including oxides of metals. Such oxides broaden the width of the gain profile and also increase the concentration of erbium dopant than can be accepted by the glass. However, further broadening and smoothing of the emission cross section is desirable.

According to the invention there is provided an erbium doped tellurite or germanate glass comprising
(a) a host glass comprising one of GeO₂ and TeO₂;
(b) an effective quantity of erbium dopant;
(c) a network modifying metal oxide; and
(d) further ingredients wherein the amounts of (a), (b), (c) and (d) total 100%.

Such a tellurite or germanate glass has a large emission cross section and a broad emission peak at around 1.55 micron. This enables broadband amplification and lasing. It also has excellent fibre drawing properties.

Preferably the concentration of the GeO₂ or TeO₂ is in the range 50 to 80 mol%. This results in a stable glass.

The oxide of a metal comprises an oxide of at least one of barium, bismuth, lead, zinc, gallium, lanthanum, niobium, tungsten, tantalum, vanadium and mixtures thereof.

These oxides act to break up the uniform network of the glass to create different sites for the erbium dopant, increase refractive index and erbium dopant solubility.

Including such oxides into the glass of the invention results in the glass having a large refractive index of the order 1.7 or higher at a wavelength of 589 nm sodium line. This in turn gives rise to a relatively large emission cross section which is important in the production of short fibre amplifiers and planar optical devices and enables the production of broadband, flat - gain amplifiers.

The oxide of a metal includes at least one selected from the group BaO, Bi₂O₃, PbO, ZnO, Ga₂O₃, La₂O₃, Li₂O, BiO, Nb₂O₅, WO₃, Ta₂O₅, V₂O₅ and mixtures thereof. Such oxides are particularly effective at broadening the emission cross section. ,

The tellurite or germanate, optical glass according to the invention further comprises at least one of Na₂ or K₂O and mixtures thereof, the concentration of which preferably being in the range trace to 20 mol%.

The tellurite or germanate optical glass according to the invention further comprises a metal halide selected from the group comprising HaCl₂, PbCl₂, PbF₃, LaF³, ZnF₂, HaF₂, NaF, NaCl, LiF and mixtures thereof.

The concentration of the metal halide can be in the range trace to 20 mol%.

The concentration of erbium dopant in the tellurite or germinate optical glass can be in the range 0.01 to 5 mol%.

Preferably the tellurite or germanate optical glass has an emission cross section greater than 7 x 10⁻²¹cm² at a wavelength of 1530nm, preferably greater than 8 x 10⁻²¹cm² at a wavelength of 1530nm.

Preferably the tellurite or germanate optical glass has a peak in the emission cross section in the 1450 to 1650 nanometres range, the emission peak having a full width at half maximum of at least 60nm, preferably at least 70nm, more, preferably at least 80nm, more preferably at least 90 nm.

Preferably the tellurite or germanate optical glass has a refractive index of at least 1.7 more preferably at least 1.8 at the 589 nm sodium line.

The present invention will now be described by way of example but not in any limitative sense with reference to the accompanying figures and tables, in which:
Figure 1 shows a partial energy level diagram of Er³⁺;
Figure 2 shows emission cross section spectra of erbium in several glasses;

Table 1 lists examples of erbium doped tellurite and germanate glass compositions according to the invention (the tellurite and germinate glass compositions are collectively referred to as heavy metal oxide (HMO) glasses; and

Table 2 lists lifetimes and emission cross sections for the glass compositions listed in table 3.

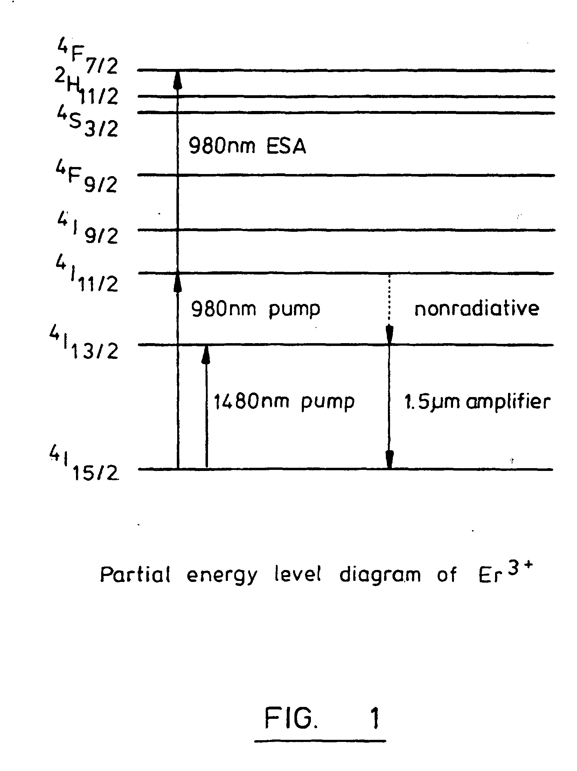

Shown in figure 1 is a partial energy level diagram of Er³⁺. Erbium doped fibre amplifiers utilize the ⁴I_{13/2} - ⁴I_{15/2} transition of Er³⁺ to obtain amplification at 1.5µm. Two pumping schemes are available. The 980 nm pump promotes the ions to the ⁴I_{11/2} level, from which they relax nonradiatively to the lasing ⁴I_{13/2} level. Alternatively, direct in-band pumping of the ⁴I_{13/2} level is possible using a 1480 nm pump. Pumping at 980 nm has several advantages. In-band pumping, as at 1480 nm, gives rise to amplifier noise, and therefore degrades amplifier performance. Moreover, in-band pumping makes the short-wavelength part of the emission spectrum unavailable for amplification. However, in order to utilize the 980 nm pump, the nonradiative ⁴I_{11/2} - ⁴I_{13/2} transition must be very fast, i.e. the lifetime of the ⁴I_{11/2} level must be short compared with the pumping rate. This is important for two reasons. First, in order to maintain population inversion between the lasing levels it is necessary for the upper lasing level (⁴I_{13/2}) to be rapidly repopulated. In conditions of high-pump high-gain, the ⁴I_{11/2} state can accumulate population, creating a bottleneck and causing gain saturation. When the lifetime of the ⁴I_{11/2} level is short this problem is greatly reduced. Second, the presence of pump ESA (excited state absorption) from the ⁴I_{11/2} level reduces pump efficiency. ESA depends on the lifetime of the upper level; when the residence time is very short ESA becomes negligible. The lifetime of the ⁴I_{11/2} level is determined by the phonon energy of the host glass: the higher the phonon energy, the shorter the lifetime, in a roughly exponential relationship. In high-phonon energy glasses, such as silica, the 980 nm pumping scheme is very efficient. In low-phonon energy glasses, such as ZBLAN, the 980 nm pump cannot be used due to the long lifetime of the feeding ⁴I_{11/2} level, and the 1480 nm pumping scheme must be employed instead. In the present invention, the modified silica glasses retain the high phonon energy of the silica family. The heavy-metal-oxide and fluoroaluminate glasses have lower phonon energies than silica, but higher than ZBLAN; and the lifetime of the ⁴I_{11/2} level is short enough to allow pumping at 980 nm.

The emission cross-section and profile of the ⁴I_{13/2} - ⁴I_{15/5} transition are strongly influenced by the host glass as disclosed in 'Rare Earth doped Fibre Lasers and Amplifiers' ed MJF Digonnet, Marcel Dekker 1993. There are two major independent effects. The value of the emission cross-section increases with the refractive index of the host. This increase reflects the relationship between the oscillator strength and the host field as represented by the refractive index of the bulk glass. The second effect modifies the emission profile and arises from the local ligand field environment of the dopant ions. The amplifying transition takes place between two energy level manifolds consisting of several Stark sub-levels (4 sub-levels in ⁴I_{13/4} and 5 sub-levels in ⁴I_{15/2}). The emission and gain profiles combine the contributions of all the transitions between the sub-levels. The profiles are determined by the Stark splitting of the two levels and the oscillator strengths of the individual transitions. Both the Stark splittings and the oscillator strengths are strongly affected by the ligand field of the ion environment. The ligand field is the local electromagnetic field as experienced by the dopant ion, and determined by the symmetry and the chemical nature of the host material. The emission and gain profiles of an Er³⁺ ion will therefore depend on the ligand field at the ion site. Asymmetric ionic ligand fields produce especially strong broadening effects. If the host glass offers a multiplicity of different dopant sites with different ligand fields, the ions at these sites will emit slightly different spectra. The total Er³⁺ emission in the glasses according to the invention combine the contributions of all ions from different sites, and will therefore produce a broader, smoother emission profile. The role of network modifiers in:the erbium doped glasses according to the invention is to break up the uniform host glass network and to create numerous different sites for the Er³⁺ dopant. The network modifiers are chosen so as to achieve two aims. Heavy-metal-oxides/fluorides are employed to increase the refractive index, thereby increasing the emission cross-section. All network modifiers are designed to provide new strongly-bonded ionic sites for the erbium dopant. Ionic bonding is associated with ionicity of ligand fields, and therefore broader emission spectrum. Furthermore, strong ionic bonding leads to increased solubility, thereby allowing higher erbium doping levels. The erbium doped optical glasses of the invention provide a multiplicity of different erbium dopant sites. The erbium ions of these sites experience different ligand fields and so will emit slightly different spectra. The total Er³⁺ emission spectrum in these glasses will be a combination of contributions from all Er³⁺ ions from different sites, and will therefore produce a broad, smooth emission profile.

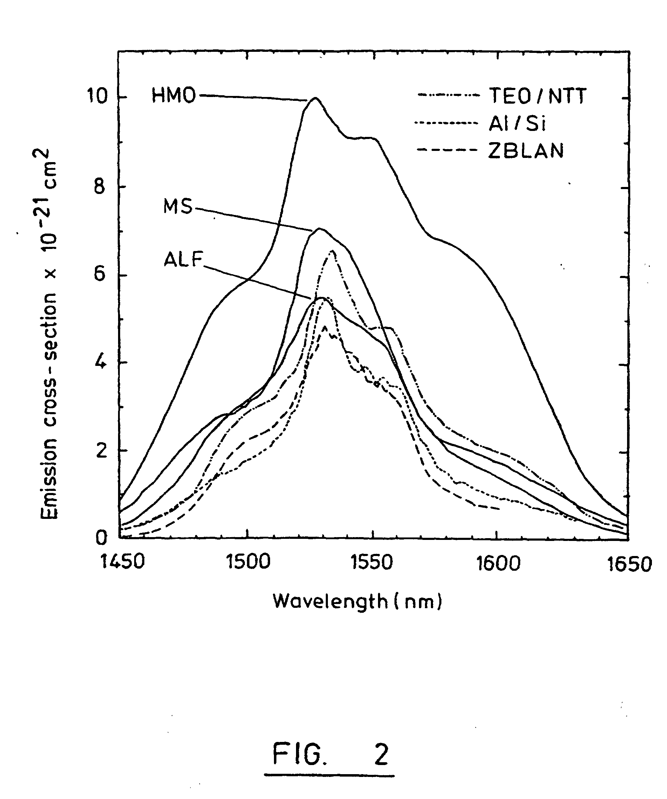

Figure 2 shows emission cross section spectra of erbium in several glasses. Modified silica(MS), heavy metal oxide (HMO) and Fluoroaluminate (ALF) glasses as shown by solid lines. Dashed lines represent the industry bench mark glasses. Although the emission spectrum differs significantly from the gain profile, broad band emission spectra give rise to a large gain band width. A higher emission cross section reduces the gain threshold and makes broadband gain easier to achieve.

Table 1 shows some erbium doped HMO glass compositions of the invention; Table 2 gives erbium lifetimes, emission cross-sections and the figure-of-merit product in these glasses. Fluorozirconate ZBLAN glass is included for comparison. Also included is a tellurite glass developed by NTT as disclosed in A Mori et al, OFC 1997, paper PD1-1.

All glasses were prepared from commercial high purity powders and were melted under clean conditions in platinum crucibles. Modified silica glasses were melted at 1150°C-1350°C and were annealed in the crucible at 400°C. HMO glasses were melted at 650-750°C and were annealed in the crucible at 200-250°C.

Fluoroaluminate glasses were melted at 950°-1000°C under dry nitrogen atmosphere, and were cast into preheated moulds at 280°-330°C. The melting temperature and duration are such as to allow a thorough homogenization of the glass, while avoiding losses due to volatilization. The annealing stage is designed to remove quenching stresses and to prevent glass cracking.

High purity raw materials are required to avoid OH⁻ and transition metal impurities in the produced glass.

**Table 1:**

| Some example compositions of Er³⁺ -doped HMO glasses. | |
|---|---|
| Glass | Composition |
| ONO1 | 50GeO₂:20PbO:14Ga₂O₃:15Bi₂O₃: 1Er₂O₃ |
| TNO1 | 42GeO₂:10TeO₂:20PbO:12Ga₂O₃: 15Bi₂O₃:1Er₂O₃ |
| TNO4 | 80TeO₂:19Na₂O:1Er₂O₃ |
| TNO541 | 79TeO₂:10Na₂O:9ZnO:2Er₂O₃ |
| Fl | 80. STeO₂:10Na₂O:9BaF₂:0.5Er₂O₃ |
| Cl | 80.5TeO₂:10Na₂O:9BaCl₂:0.5Er₂O₃ |
| L3 | 75TeO₂:15Li₂O:9ZnO:1Er₂O₃ |
| K2 | 75 TeO₂:15K₂O:9ZnO:1Er₂O₃ |
| GNO3 | 70GeO₂:10PbO:9Ga₂O₃:10Bi₂O₃:1Er₂O₃ |

**Table 2:**

| Spectroscopic parameters of Er³⁺ in some of the HMO glasses listed in Table 1; the data for ZBLAN are included for comparison. The fluorescene lifetime τ, the emission cross-section σ, the figure-of-merit τxσ, and the full-wifth-half-maximum (FWHM) of the emission. | | | | |
|---|---|---|---|---|
| Glass | τ (ms) | σ x 10⁻²¹ (cm²) | τxσ x 10⁻²⁴ (cm²s) | FWHM (nm) |
| ONO1 | 3.9 | 8.6 | 34 | 72 |
| TNO1 | 3.1 | 8.8 | 27 | 82 |
| TNO4 | 3.7 | 8.7 | 32 | 90 |
| TNO541 | 2.0 | 10 | 20 | 120 |
| NTT tellurite | 4 | 6.6 | 26 | 60 |
| ZBLAN | 10 | 5 | 50 | 70 |

## Claims

1. An erbium doped tellurite or germanate optical glass comprising:
a) a host glass comprising one of GeO₂ or TeO₂;
b) an effective quantity of erbium dopant;
c) a network modifying metal oxide including at least one selected from the group BaO, Bi₂O₃, PbO, ZnO, Ga₂O₃, La₂O₃, Li₂O, BiO, Nb₂O₅, WO₃, Ta₂O₅, V₂O₅ and mixtures thereof;
d) at least one of Na₂O and K₂O and mixtures thereof;
e) a metal halide selected from the group comprising BaCl₂, PbCl₂, PbF₃, LaF₃, ZnF₂, BaF₂, NaCl, LiF and mixtures thereof.
f) other ingredients wherein the amounts of (a), (b), (c), (d), (e) and (f) total 100%.

2. An erbium doped tellurite or germanate optical glass as claimed in claim one wherein the concentration of the GeO₂ or TeO₂ is in the range 50 to 80mol% more preferably 70-80mol%.

3. An erbium doped tellurite or germanate optical glass as claimed in claim one wherein the concentration of the metal halide is in the range trace to 20mol%.

4. An erbium doped tellurite or germanate optical glass as claimed in any one of claims one to three wherein the concentration of erbium is in the range 0.01 to 5mol%.

5. An erbium doped tellurite or germanate optical glass as claimed in claim one wherein the optical glass has an emission cross section greater than 7 x 10⁻²¹cm² at a wavelength of 1530nm, preferably greater than 8 x 10⁻²¹cm² at a wavelength of 1530nm.

6. An erbium doped tellurite or germanate optical glass as claimed in claim one, wherein the optical glass has an emission peak in the emission cross section in the 1450 to 1650nm range, the emission peak having a full width at half maximum of at least 60nm, preferably at least 70nm, more preferably at least 80nm, more preferably at least 90nm.

7. An erbium doped tellurite or germanate optical glass as claimed in any one of claims one to five, the optical glass having a refractive index of at least 1.7, preferably at least 1.8 at the 589 sodium line.

## Patentansprüche

1. Mit Erbium dotiertes optisches Tellurit- oder Germanat-Glas, mit
a) einem Wirtsglas mit GeO₂ oder TeO₂;
b) einer effektiven Menge eines Erbium-Dotierstoffes;
c) einem das Netz modifizierenden Metalloxid, das wenigstens eines enthält, das ausgewählt ist aus der Gruppe BaO, Bi₂O₃, PbO, ZnO, Ga₂O₃, La₂O₃, Li₂O, BiO, Nb₂O₅, WO₃, Ta₂O₅, V₂O₅ und Mischungen davon;
d) wenigstens einem von Na₂O und K₂O und Mischungen davon;
e) einem Metallhalogenid, das ausgewählt ist aus der Gruppe mit BaCl₂, PbCl₂, PbF₃, LaF₃, ZnF₂, BaF₂, NaCl, LiF und Mischungen davon;
f) weiteren Bestandteilen, wobei die Mengen von (a), (b), (c), (d), (e), und (f) insgesamt 100% ergeben.

2. Mit Erbium dotiertes optisches Tellurit- oder Germanat-Glas nach Anspruch 1, bei welchem die Konzentration des GeO₂ oder TeO₂ im Bereich von 50 bis 80 Mol-%, bevorzugter 70 bis 80 Mol-% liegt.

3. Mit Erbium dotiertes optisches Tellurit- oder Germanat-Glas nach Anspruch 1, bei welchem die Konzentration des Metallhalogenids im Bereich von Spuren bis 20 Mol-% liegt.

4. Mit Erbium dotiertes optisches Tellurit- oder Germanat-Glas nach einem der Ansprüche 1 bis 3, bei welchem die Konzentration des Erbium im Bereich von 0,01 bis 5 Mol-% liegt.

5. Mit Erbium dotiertes optisches Tellurit- oder Germanat-Glas nach Anspruch 1, bei welchem das optische Glas einen Emissionsquerschnitt größer als 7×10⁻²¹ cm² bei einer Wellenlänge von 1530 nm besitzt, bevorzugt größer als 8×10⁻²¹ ccm² bei einer Wellenlänge von 1530 nm.

6. Mit Erbium dotiertes optisches Tellurit- oder Germanat-Glas nach Anspruch 1, bei welchem das optische Glas eine Emissionsspitze im Emissionsquerschnitt im Bereich von 1450 bis 1650 nm besitzt, wobei die Emissionsspitze eine Peak-Halbwertsbreite von wenigstens 60 nm, bevorzugt wenigstens 70 nm, bevorzugter wenigstens 80 nm, bevorzugter wenigstens 90 nm aufweist.

7. Mit Erbium dotiertes optisches Tellurit- oder Germanat-Glas nach einem der Ansprüche 1 bis 5, wobei das optische Glas einen Brechungsindex von wenigstens 1,7, bevorzugt wenigstens 1,8 bei der 689 Natriumlinle aufweist.

## Revendications

1. Verre optique de tellurite ou de germanate, dopé à l'erbium, comprenant :
a) un verre hôte comprenant du GeO₂ ou du TeO₂;
b) une quantité efficace de dopant à l'erbium ;
c) un oxyde métallique modifiant le réseau, comprenant au moins un élément choisi parmi le groupe suivant : BaO, Bi₂O₃, PbO, ZnO, Ga₂O₃, La₂O₃, Li₂O, BiO, Nb₂O₅, WO₃, Ta₂O₅, V₂O₅ et des mélanges de ceux-ci ;
d) au moins l'un des éléments Na₂O ou K₂O, et des mélanges de ceux-ci ;
e) un halogénure choisi dans le groupe comprenant BaCl₂, PbCl₂, PbF₃, LaF₃, ZnF₂, BaF₂, NaCl, LiF et des mélanges de ceux-ci.
f) d'autres ingrédients formant avec les quantités (a), (b), (c), (d), (e) et (f) un total de 100 %.

2. Verre optique de tellurite ou de germanate, dopé à l'erbium, selon la revendication une, dans lequel la concentration du GeO₂ ou du TeO₂ se situe dans la plage entre 50 et 80 % molaire, de préférence entre 70 et 80 % molaire.

3. Verre optique de tellurite ou de germanate, dopé à l'erbium, selon la revendication une, dans lequel la concentration de l'halogénure se situe dans la plage entre la trace et 20 % molaire.

4. Verre optique de tellurite ou de germanate, dopé à l'erbium, selon l'une des revendications une à trois, dans lequel la concentration en erbium est compris dans la plage entre 0,01 et 5 % molaire.

5. Verre optique de tellurite ou de germanate, dopé à l'erbium, selon la revendication une, dans lequel le verre optique a une section transversale d'émission supérieure à 7 x 10⁻²¹ cm² à une longueur d'onde de 1530 nm, de préférence supérieure à 8 x 10⁻²¹ cm² à une longueur d'onde de 1530 nm.

6. Verre optique de tellurite ou de germanate, dopé à l'erbium, selon la revendication une, dans lequel le verre optique a un pic d'émission dans la section transversale d'émission dans la gamme entre 1450 et 1650 nm, le pic d'émission ayant une largeur à mi-hauteur d'au moins 60 nm, de préférence d'au moins 70 nm, de façon encore préférée d'au moins 80 nm, de façon encore préférée d'au moins 90 nm.

7. Verre optique de tellurite ou de germanate, dopé à l'erbium, selon la revendication une à cinq, le verre optique présentant un indice de réfraction d'au moins 1,7, de préférence d'au moins 1,8 à la raie de sodium 589.
